# EUROPÄISCHE PATENTSCHRIFT

(11) **EP 2 673 174 B1**
(45) Veröffentlichungstag und Bekanntmachung des Hinweises auf die Patenterteilung: **21.09.2016**
(21) Anmeldenummer: 12702974.2
(22) Anmeldetag: 02.02.2012
(51) Int. Cl.: B60T 8/17, B60T 8/1755

(54) **VERFAHREN UND VORRICHTUNG ZUM STABILISIEREN DER FAHRT EINES SCHLINGERNDEN ANHÄNGERS**
METHOD AND DEVICE FOR STABILIZING THE RUNNING OF A SNAKING TRAILER
PROCÉDÉ ET DISPOSITIF POUR STABILISER LA MARCHE D'UNE REMORQUE QUI EST EN LOUVOIEMENT

(30) Priorität: 11.02.2011 DE 102011010994
(43) Veröffentlichungstag der Anmeldung: 18.12.2013
(73) Patentinhaber: Audi AG, 85045 Ingolstadt (DE); Continental Teves AG & Co. oHG, 60488 Frankfurt am Main (DE)
(72) Erfinder: THEEL, Thomas, 86697 Oberhausen (DE); MUNTU, Matthias, 65719 Hofheim am Taunus (DE); BREMEIER, Volker, 64839 Münster (DE)
(86) Internationale Anmeldenummer: PCT/EP2012/000465
(87) Internationale Veröffentlichungsnummer: WO 2012/107184

(56) Entgegenhaltungen:
- EP-A1- 2 058 190
- EP-A2- 2 008 892
- WO-A1-2004/041612
- DE-A1- 10 225 120
- DE-A1-102009 011 907

## Beschreibung

Die Erfindung betrifft ein Verfahren zum Stabilisieren der Fahrt eines schlingernden, von einem Fahrzeug gezogenen Anhängers. Hierbei wird ein den Anhänger und das Fahrzeug umfassendes Gespann selbsttätig abgebremst, wenn eine Amplitude der Schwingung des Anhängers einen vorbestimmten Wert überschreitet. Dadurch wird das Gespann auf eine Geschwindigkeit verzögert, bei welcher die Amplitude der Schwingung des Anhängers einen vorbestimmten Wert unterschreitet. Bei schlingerndem Anhänger und Vorliegen einer ersten Fahrgeschwindigkeit des Gespanns, wird das Gespann stärker verzögert als bei schlingerndem Anhänger und Vorliegen einer zweiten Fahrgeschwindigkeit des Gespanns, welche geringer ist als die erste Fahrgeschwindigkeit. Des Weiteren betrifft die Erfindung eine Vorrichtung zum Stabilisieren der Fahrt eines schlingernden Anhängers.

Die DE 10 2009 011 907 A1 beschreibt ein Verfahren und ein System zur Stabilisierung eines Gespanns, dass einen von einem Fahrzeug gezogenen Anhänger aufweist. Das System umfasst eine Einrichtung zur Erkennung von Anhängerschwingungen. Eine weitere Einrichtung dient der Dämpfung der Schwingung des Gespanns durch fahrerunabhängige Regeleingriffe in Abhängigkeit von einer Schlingerbewegung des Gespanns. Die fahrerunabhängigen Regeleingriffe können Bremseingriffe, die Reduktion der Motorleistung oder Lenkeingriffe umfassen. Damit die Schwingung abklingt, wird das Gespann zügig unter eine kritische Geschwindigkeit abgebremst. Bevorzugt wird eine schnelle und aggressive Dämpfung vorgenommen, wenn das Gespann eine Geschwindigkeit oberhalb der kritischen Geschwindigkeit aufweist.

Die WO 2004/041612 A1 beschreibt ein Verfahren zum Stabilisieren eines Gespanns, bei welchem Schlingerbewegungen des Gespanns überwacht und beim Erkennen eines instabilen Fahrverhaltens fahrstabilisierende Maßnahmen ergriffen werden. Bei hoher Gespanngeschwindigkeit wird schon bei einer kleinen Schwingungsamplitude auf das Vorliegen einer Instabilität erkannt. Bei niedriger Fahrgeschwindigkeit wird die Schwelle der Erkennung hingegen angehoben. Auch erfolgt der stabilisierende Eingriff bei niedriger Fahrgeschwindigkeit erst dann, wenn die Amplitude einen hohen Schwellenwert überschreitet. Bei niedriger Fahrgeschwindigkeit wird der Eingriff jedoch erst dann beendet, wenn eine niedrigere Amplitude der Schwingung vorliegt als bei hoher Ausgangs-Fahrgeschwindigkeit.

Die DE 102 25 120 A1 beschreibt ein Verfahren zur Überwachung von Kraftfahrzeugen mit Anhängern auf Instabilitäten, bei welchem zur Erkennung von Schlingerbewegungen Messgrößen ausgewertet werden. Hierbei werden Amplituden der Schwingung mit einem Schwellenwert verglichen, welcher nach Maßgabe der Fahrzeuggeschwindigkeit geschätzt wird.

Die EP 2 008 892 A2 beschreibt eine Vorrichtung zum Stabilisieren der Fahrt eines Gespanns, bei welcher die Bremskraft zum Stabilisieren auf die Vorderräder eines Zugfahrzeugs des Gespanns verteilt wird. Hierbei wird zudem berücksichtigt, ob ein Fahrer ein Bremspedal betätigt.

Die EP 2 058 100 A1 beschreibt ein Fahrerassistenzsystem für Kraftfahrzeuge, bei welchem das Ausmaß des Schlingerns eines Anhängers erfasst wird und bei Überschreitung eines Schwellenwerts eine Bremsverzögerung für autonome Bremsvorgänge begrenzt wird. Hierbei sind die Schwellenwerte von der Fahrgeschwindigkeit und dem Reibungskoeffizienten der Fahrbahn abhängig.

Die EP 1 784 326 B1 beschreibt ein Verfahren zur Unterstützung des Fahrers eines Kraftfahrzeugs bei schlingerndem Anhänger. Zur Erkennung einer Pendelbewegung des Anhängers werden die Giergeschwindigkeit, die Querbeschleunigung und der Lenkwinkel des Fahrzeugs ausgewertet. Dem Fahrer wird bei Vorliegen einer mäßigen Schwingung des Anhängers ein Warnhinweis übermittelt, um ihn zur Bremsung zu veranlassen. Die vom Fahrer ausgeübte Bremsbetätigung wird überwacht und durch automatisches Betätigen der Fahrzeugbremsen unterstützt, wobei ein Bremsdruck ausgeübt wird, mit dem eine Fahrzeugverzögerung zum Zwecke der Stabilisierung des Anhängers erreicht wird. Hierbei wird der zur Unterstützung des Fahrers automatisch eingestellte Bremsdruck in Abhängigkeit von dem Druck eingestellt, welchen der Fahrer auf das Bremspedal ausübt. Bei starker Schwingung des Anhängers wird das Fahrzeug unmittelbar, unabhängig vom Zutun des Fahrers, durch einen automatischen Bremseneingriff stabilisiert. Dieser automatische Bremseneingriff ist abhängig von der Fahrzeuggeschwindigkeit und der Stärke der Schwingung.

Des Weiteren ist es aus dem Stand der Technik bekannt, die Art des Bremseingriffs beim selbsttätigen Abbremsen von der Amplitude der Schwingung abhängig zu machen. Bei starken Schwingungen des Anhängers werden bevorzugt alle bremsbaren Räder des Fahrzeugs - gegebenenfalls auch wechselseitig - abgebremst. Bei moderaten Schwingungen, welche das Potenzial in sich bergen, in eine sich aufschaukelnde Schwingung überzugehen, werden hingegen häufig wechselseitige Bremseingriffe vorgenommen, um zu vermeiden dass sich die Amplituden der Schwingung vergrößern.

Aufgabe der vorliegenden Erfindung ist es, ein Verfahren der eingangs genannten Art sowie eine entsprechende Vorrichtung so zu verbessern, dass die Fahrt des Anhängers besonders sicher stabilisiert wird.

Diese Aufgabe wird durch ein Verfahren mit den Merkmalen des Patentanspruchs 1 und durch eine Vorrichtung mit den Merkmalen des Patentanspruchs 5 gelöst. Vorteilhafte Ausgestaltungen mit zweckmäßigen Weiterbildungen der Erfindung sind in den abhängigen Patentansprüchen angegeben.

Bei dem erfindungsgemäßen Verfahren wird bei schlingerndem Anhänger und bei Vorliegen einer ersten Fahrgeschwindigkeit des Gespanns das Gespann stärker verzögert als bei schlingerndem Anhänger und Vorliegen einer zweiten Fahrgeschwindigkeit des Gespanns, welche geringer ist als die erste Fahrgeschwindigkeit. Hierbei wird das Gespann bei Vorliegen der ersten Fahrgeschwindigkeit bereits beim Überschreiten eines geringeren Werts der Amplitude abgebremst als bei Vorliegen der zweiten Fahrgeschwindigkeit.

Dem liegt die Erkenntnis zugrunde, dass ein Schlingern des Anhängers, welches beispielsweise durch das Überfahren einer Bodenwelle ausgelöst wird, bei einer niedrigen Fahrgeschwindigkeit weniger kritisch ist als eine Schwingung mit derselben Amplitude bei einer hohen Fahrgeschwindigkeit. Entsprechend wird vorliegend bei Vorliegen einer hohen Fahrgeschwindigkeit der Bremsvorgang bereits ausgelöst, wenn eine Amplitude der Schwingung des Anhängers vorliegt, welche bei niedrigerer Fahrgeschwindigkeit als unbedenklich eingestuft wird. Zudem wird bei hoher Fahrgeschwindigkeit und zugleich kritisch schlingerndem Anhänger das Gespann besonders stark verzögert. Es wird also beim Überschreiten des - geschwindigkeitsabhängigen - Werts der Amplitude der Schwingung das Gespann nicht mit einer konstant vorgegebenen Verzögerung abgebremst, sondern auch die Verzögerung ist geschwindigkeitsabhängig.

Durch das geschwindigkeitsabhängig unterschiedlich starke Verzögern des Gespanns kann sichergestellt werden, dass es nicht unmittelbar nach einer lediglich scheinbaren Stabilisierung der Fahrt des Anhängers zu einem erneuten Aufschwingen des Anhängers kommt. Zu einem solchen erneuten Aufschwingen des Anhängers könnte es zum Beispiel insbesondere dann kommen, wenn ein bestimmter Beladungszustand des Anhängers vorliegt, etwa eine ungünstige Gewichtsverteilung auf vordere und hintere Bereiche des Anhängers. Auch die auf eine Anhängerkupplung des Fahrzeugs wirkende Stützlast, die Leistung und das Gewicht des Zugfahrzeugs, die geometrische Auslegung des Anhängers und der Zustand der Bereifung von Fahrzeug und Anhänger können einen Einfluss darauf haben, ob es unmittelbar nach der scheinbaren Stabilisierung zu einem erneuten Aufschwingen kommt.

Dadurch, dass vorliegend bei der hohen Fahrgeschwindigkeit und schlingerndem Anhänger das Gespann besonders stark verzögert wird, werden die Schwingungen besonders rasch und besonders stark gedämpft. Die Dämpfungskonstante, welche das Abklingen der Schwingung beschreibt, ist nämlich abhängig von der Fahrgeschwindigkeit sowie auch von der Beladung, wobei bei besonders hoher Fahrgeschwindigkeit eine vergleichsweise geringe Dämpfungskonstante vorliegt. Die stärkere Dämpfung, welche bei niedrigerer Fahrgeschwindigkeit des Gespanns vorliegt, wird durch die starke - gegebenenfalls auch wechselseitige - Verzögerung besonders schnell erreicht, so dass ein wiederholtes Aufschwingen des Anhängers sicher unterbunden wird.

Rückwärts und seitwärts des Gespanns vorhandener Verkehr wird so nicht durch den erneut aufschwingenden Anhänger gefährdet. Auch braucht der stabilisierende, automatische Bremsvorgang nicht innerhalb eines kurzen Zeitintervalls erneut vorgenommen zu werden, so dass der Fahrer des Gespanns nicht durch einen erneuten - unerwarteten - automatisch ausgelösten Bremseingriff verwirrt wird und sich nicht eingebremst fühlt.

Die besonders sichere Stabilisierung des Anhängers ist insbesondere dann günstig, wenn das Gespann vor dem Bremsvorgang eine besonders hohe Geschwindigkeit aufweist, und/oder wenn eine vergleichsweise rutschige Fahrbahn, insbesondere nasse Fahrbahn, vorliegt.

Gemäß der Erfindung wird der bei Vorliegen der ersten Fahrgeschwindigkeit ausgelöste Bremsvorgang erst beim Unterschreiten eines geringeren Werts der Amplitude beendet als ein bei Vorliegen der zweiten Fahrgeschwindigkeit ausgelöster Bremsvorgang. Es wird also nicht nur der Beginn des selbsttätig durchgeführten Bremsvorgangs von der Amplitude der Schwingung abhängig gemacht, welche bei einer bestimmten Fahrgeschwindigkeit vorliegt, sondern auch das Ende des Bremsvorgangs. Dadurch wird besonders zuverlässig sichergestellt, dass bei hoher Fahrgeschwindigkeit das Gespann nicht nur bis zu einer scheinbaren Stabilisierung verzögert wird, sondern dass die Amplitude der Schwingung soweit reduziert ist, dass ein erneuter kritischer Gespannzustand nicht mehr zu befürchten ist.

Zum Abbremsen des Gespanns kann die Leistungsabgabe eines Antriebsmotors verringert werden. Bevorzugt wird jedoch zusätzlich wenigstens eine Betriebsbremse betätigt. Wenn das Fahrzeug wenigstens einen zum Antreiben eines Rads ausgelegten elektrischen Antriebsmotor aufweist, kann auch dieser zum Verzögern des Gespanns eingesetzt werden. Dadurch kann eine besonders starke Verzögerung erreicht werden, was auch bei hoher Fahrgeschwindigkeit zu einer raschen Stabilisierung der Fahrt des Anhängers führt.

Als weiter vorteilhaft hat es sich gezeigt, wenn das Gespann auch dann abgebremst wird, wenn ein Fahrer des Fahrzeugs eine höhere Leistungsabgabe eines Antriebsmotors des Fahrzeugs anfordert oder wenn der Fahrer eine Bremseinrichtung des Fahrzeugs unbetätigt belässt. Es wird also eine in Anbetracht der kritischen Gespannsituation falsche Handlung des Fahrers, nämlich entweder dessen Passivbleiben oder Gasgeben, kompensiert.

Schließlich hat es sich als vorteilhaft gezeigt, wenn das Gespann stärker selbsttätig abgebremst wird, wenn ein Fahrer des Fahrzeugs eine Bremseinrichtung des Fahrzeugs nicht ausreichend stark betätigt, um das Gespann auf die Geschwindigkeit zu verzögern, bei welcher die Amplitude der Schwingung des Anhängers den vorbestimmten Wert unterschreitet. Dadurch ist sichergestellt, dass der stabile Gespannzustand, nämlich das Unterschreiten des vorbestimmten Werts der Amplitude der Schwingung des Anhängers, unabhängig von einer etwaigen Bremsbetätigung des Fahrers sicher und rasch erreicht wird.

Die erfindungsgemäße Vorrichtung zum Stabilisieren der Fahrt eines schlingernden, von einem Fahrzeug gezogenen Anhängers umfasst eine Erfassungseinrichtung, mittels welcher eine Amplitude der Schwingung des Anhängers erfassbar ist. Eine Bremseinrichtung bremst ein den Anhänger und das Fahrzeug umfassendes Gespann in Abhängigkeit vom Wert der Amplitude ab. Hierbei ist die Bremseinrichtung dazu ausgelegt, das Gespann auf eine Geschwindigkeit zu verzögern, bei welcher die Amplitude der Schwingung des Anhängers einen vorbestimmten Wert unterschreitet. Eine Steuerungseinrichtung ist zum Ansteuern der Bremseinrichtung in Abhängigkeit von der Fahrgeschwindigkeit des Gespanns ausgelegt derart, dass bei schlingerndem Anhänger und Vorliegen einer ersten Fahrgeschwindigkeit des Gespanns das Gespann stärker verzögert wird als bei schlingerndem Anhänger und Vorliegen einer zweiten Fahrgeschwindigkeit des Gespanns, welche geringer ist als die erste Fahrgeschwindigkeit. Zudem steuert die Steuerungseinrichtung die Bremseinrichtung derart an, dass das Gespann bei Vorliegen der ersten Fahrgeschwindigkeit bereits beim Überschreiten eines geringeren Werts der Amplitude abgebremst wird als bei Vorliegen der zweiten Fahrgeschwindigkeit und derart, dass der bei Vorliegen der ersten Fahrgeschwindigkeit ausgelöste Bremsvorgang erst beim Unterschreiten eines geringeren Werts der Amplitude beendet wird als ein bei Vorliegen der zweiten Fahrgeschwindigkeit ausgelöster Bremsvorgang.

Als Bremseinrichtung können insbesondere die auf die Räder wirkende Betriebsbremse des Fahrzeugs und/oder auf die Räder des Anhängers wirkenden Bremsen zum Einsatz kommen. Es kann auch ein zum Antreiben von Rädern des Fahrzeugs ausgelegter elektrischer Antriebsmotor, etwa ein Radnabenmotor, zum Verzögern des Gespanns genutzt werden.

Die für das erfindungsgemäße Verfahren beschriebenen Vorteile und bevorzugten Ausführungsformen gelten auch für die erfindungsgemäße Vorrichtung.

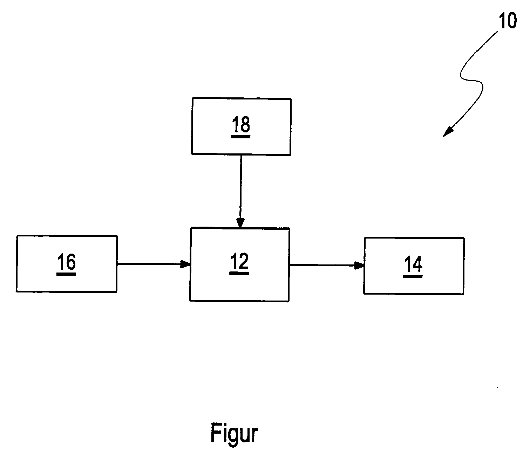

Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnung.

Diese zeigt stark schematisiert eine Vorrichtung zum Stabilisieren der Fahrt eines Gespanns, welches einen Anhänger und ein Zugfahrzeug umfasst.

Die in der Figur gezeigte Vorrichtung 10 umfasst eine Steuerungseinrichtung 12, welche zum Ansteuern einer Bremseinrichtung 14 ausgelegt ist. Wird die Bremseinrichtung 14 angesteuert, so sorgt diese für eine Verzögerung des Gespanns, und zwar unabhängig davon, ob der Fahrer des Zugfahrzeugs eine Bremse betätigt oder nicht. Die Bremseinrichtung 14 wirkt auf alle bremsbaren Räder des Fahrzeugs, welches den Anhänger zieht.

Um festzustellen, ob ein solcher selbsttätig durchgeführter Bremseingriff nötig ist, wertet die Steuerungseinrichtung 12 Signale einer Erfassungseinrichtung 16 aus, welche eine Amplitude der Schwingung des Anhängers erfasst. Hierfür können die Querbeschleunigung, die Gierrate sowie der Lenkwinkel des Fahrzeugs ausgewertet werden, welche im Fahrzeug ohnehin im Rahmen der elektronischen Stabilitätskontrolle (ESP) von der Steuerungseinrichtung 12 genutzt werden.

Vorliegend sind in der Steuerungseinrichtung 12 Eintrittsschwellen hinterlegt, bei deren Überschreiten die Steuerungseinrichtung 12 das Abbremsen mittels der Bremseinrichtung 14 veranlasst. Diese Eintrittsschwellen sind Grenzwerte für die Amplitude der Schwingung des Anhängers, wobei diese Grenzwerte geschwindigkeitsabhängig sind. Entsprechend wird der Steuerungseinrichtung 12 auch ein die Fahrgeschwindigkeit des Gespanns repräsentierender Datenwert von einem Geschwindigkeitssensor 18 zugeführt.

Bei einer hohen Fahrgeschwindigkeit wird der Bremsvorgang selbsttätig ausgelöst, auch wenn eine vergleichsweise geringe Amplitude der Schwingung des Anhängers vorliegt. Bei einer niedrigen Fahrgeschwindigkeit kann es hingegen vorgesehen sein, dass selbst eine höhere Amplitude der Schwingung noch nicht zu dem von der Steuerungseinrichtung 12 ausgelösten selbsttätig durchgeführten Bremseingriff führt.

Der vom Geschwindigkeitssensor 18 gelieferte Datenwert wird vorliegend auch dazu herangezogen, die Stärke der Verzögerung festzulegen, mit welcher die Bremseinrichtung 14 das Gespann abbremst. Entsprechend wird bei einer hohen Fahrgeschwindigkeit und schlingerndem Anhänger das Gespann stärker verzögert als bei einer niedrigeren Fahrgeschwindigkeit und sogar gegebenenfalls stärker schlingerndem Anhänger.

Die bei hoher Fahrgeschwindigkeit besonders starke Verzögerung des Gespanns, welche die Bremseinrichtung 14 bewirkt, führt dazu, dass das Gespann schneller in einen Bereich der Fahrgeschwindigkeit gelangt, bei welchem die dem Gespann zugeordnete Dämpfungskonstante größer ist als bei einer hohen Fahrgeschwindigkeit. Bei hoher Fahrgeschwindigkeit liegt nämlich eine besonders geringe Dämpfungskonstante vor, so dass die Schwingung des Anhängers nur vergleichsweise langsam abklingt.

Wird hingegen das Gespann besonders stark verzögert, so sorgt die bei niedrigerer Fahrgeschwindigkeit größere Dämpfungskonstante dafür, dass die Schwingung des Anhängers besonders rasch abklingt. Dadurch wird sicher vermieden, dass es unmittelbar nach dem durch die Steuerungseinrichtung 12 durch Ansteuern der Bremseinrichtung 14 ausgelösten Bremsvorgang zu einem erneuten, unerwünschten Aufschwingen des Anhängers kommt.

Der Fahrer fühlt sich so nicht eingebremst und wird nicht dadurch verwirrt, dass nach einem unmittelbar auf einen ersten automatischen Bremsvorgang folgenden erneuten Aufschwingen des (nur scheinbar stabilisierten) Anhängers die Fahrgeschwindigkeit des Gespanns erneut automatisch verzögert wird. Zudem werden sich hinter oder neben dem Gespann befindende Verkehrsteilnehmer in einer kritischen Fahrsituation nicht durch das erneute Aufschwingen des Anhängers gefährdet.

Die starke Verzögerung wirkt sich insbesondere bei hoher Fahrgeschwindigkeit auf das Stabilisieren der Fahrt des Anhängers positiv aus, und dies insbesondere dann, wenn eine vergleichsweise rutschige Fahrbahn vorliegt.

Vorliegend sind auch die Austrittsschwellen der Gespannstabilisierung von der Fahrgeschwindigkeit abhängig. Entsprechend wird beim starken Verzögern des Gespanns der von der Steuerungseinrichtung 12 ausgelöste Bremsvorgang erst dann beendet, wenn die Schwingung des Anhängers einen vergleichsweise geringen Wert erreicht hat. Liegt hingegen bei schlingerndem Anhänger eine vergleichsweise niedrige Fahrgeschwindigkeit vor, so erfolgt ein weniger starker automatischer Bremseingriff, und der Bremsvorgang wird beendet, auch wenn die Schwingung des Anhängers noch eine vergleichsweise große Amplitude aufweist. Bei niedriger Fahrgeschwindigkeit des Gespanns sorgt nämlich die dann recht große Dämpfungskonstante für ein rasches Abklingen selbst dieser noch eine vergleichsweise große Amplitude aufweisenden Schwingung.Bei der Steuerungseinrichtung 12 kann es sich insbesondere um ein ESP-Steuergerät handeln, in welchem zum von der Geschwindigkeit abhängigen Vorgeben der Sollverzögerung des Gespanns bei schlingerndem Anhänger eine Kennlinie hinterlegt ist.

## Patentansprüche

1. Verfahren zum Stabilisieren der Fahrt eines schlingernden, von einem Fahrzeug gezogenen Anhängers, bei welchem ein den Anhänger und das Fahrzeug umfassendes Gespann selbsttätig abgebremst wird, wenn eine Amplitude der Schwingung des Anhängers einen vorbestimmten Wert überschreitet, wobei das Gespann auf eine Geschwindigkeit verzögert wird, bei welcher die Amplitude der Schwingung des Anhängers einen vorbestimmten Wert unterschreitet,
wobei bei schlingerndem Anhänger und Vorliegen einer ersten Fahrgeschwindigkeit des Gespanns, das Gespann stärker verzögert wird als bei schlingerndem Anhänger und Vorliegen einer zweiten Fahrgeschwindigkeit des Gespanns, welche geringer ist als die erste Fahrgeschwindigkeit,
**dadurch gekennzeichnet, dass**
das Gespann bei Vorliegen der ersten Fahrgeschwindigkeit bereits beim Überschreiten eines geringeren Werts der Amplitude abgebremst wird als bei Vorliegen der zweiten Fahrgeschwindigkeit, wobei der bei Vorliegen der ersten Fahrgeschwindigkeit ausgelöste Bremsvorgang erst beim Unterschreiten eines geringeren Werts der Amplitude beendet wird als ein bei Vorliegen der zweiten Fahrgeschwindigkeit ausgelöster Bremsvorgang.

2. Verfahren nach Anspruch 1,
**dadurch gekennzeichnet, dass**
zum Abbremsen des Gespanns die Leistungsabgabe eines Antriebsmotors des Fahrzeugs verringert und/oder wenigstens eine Betriebsbremse des Fahrzeugs betätigt und/oder wenigstens ein zum Antreiben eines Rads des Fahrzeugs ausgelegter elektrischer Antriebsmotor genutzt wird.

3. Verfahren nach Anspruch 1 oder 2,
**dadurch gekennzeichnet, dass**
das Gespann auch dann abgebremst wird, wenn ein Fahrer des Fahrzeugs eine höhere Leistungsabgabe eines Antriebsmotors des Fahrzeugs anfordert oder eine Bremseinrichtung des Fahrzeugs unbetätigt belässt.

4. Verfahren nach einem der Ansprüche 1 bis 3,
**dadurch gekennzeichnet, dass**
das Gespann stärker abgebremst wird, wenn ein Fahrer des Fahrzeugs eine Bremseinrichtung des Fahrzeugs nicht ausreichend stark betätigt, um das Gespann auf die Geschwindigkeit zu verzögern, bei welcher die Amplitude der Schwingung des Anhängers den vorbestimmten Wert unterschreitet.

5. Vorrichtung zum Stabilisieren der Fahrt eines schlingernden, von einem Fahrzeug gezogenen Anhängers, mit einer Erfassungseinrichtung (16) zum Erfassen einer Amplitude der Schwingung des Anhängers und mit einer Bremseinrichtung (14) zum Abbremsen eines den Anhänger und das Fahrzeug umfassenden Gespanns in Abhängigkeit vom Wert der Amplitude, wobei die Bremseinrichtung (14) dazu ausgelegt ist, das Gespann auf eine Geschwindigkeit zu verzögern, bei welcher die Amplitude der Schwingung des Anhängers einen vorbestimmten Wert unterschreitet,
und mit einer Steuerungseinrichtung (12) zum Ansteuern der Bremseinrichtung (14) in Abhängigkeit von der Fahrgeschwindigkeit des Gespanns derart, dass bei schlingerndem Anhänger und Vorliegen einer ersten Fahrgeschwindigkeit des Gespanns, das Gespann stärker verzögert wird als bei schlingerndem Anhänger und Vorliegen einer zweiten Fahrgeschwindigkeit des Gespanns, welche geringer ist als die erste Fahrgeschwindigkeit,
**dadurch gekennzeichnet, dass**
Steuerungseinrichtung (12) zum Ansteuern der Bremseinrichtung (14) derart ausgelegt ist, dass das Gespann bei Vorliegen der ersten Fahrgeschwindigkeit bereits beim Überschreiten eines geringeren Werts der Amplitude abgebremst wird als bei Vorliegen der zweiten Fahrgeschwindigkeit, und derart, dass der bei Vorliegen der ersten Fahrgeschwindigkeit ausgelöste Bremsvorgang erst beim Unterschreiten eines geringeren Werts der Amplitude beendet wird als ein bei Vorliegen der zweiten Fahrgeschwindigkeit ausgelöster Bremsvorgang.

## Claims

1. Method for stabilising the drive of a fishtailing trailer pulled by a vehicle, in which a combination comprising the trailer and the vehicle is automatically braked if an amplitude of the oscillation of the trailer exceeds a predetermined value, wherein the combination is decelerated to a speed at which the amplitude of the oscillation of the trailer falls below a predetermined value,
wherein in the case of a fishtailing trailer and existence of a first driving speed of the combination, the combination is decelerated more strongly than in the case of a fishtailing trailer and existence of a second driving speed of the combination which is lower than the first driving speed,
**characterised in that**
the combination is already braked in case of existence of the first driving speed when a lower value of the amplitude is exceeded than in the case of existence of the second driving speed, wherein the braking procedure triggered in the case of existence of the first driving speed is only ended when a lower value of the amplitude is fallen below than a braking procedure triggered in the case of existence of the second driving speed.

2. Method according to Claim 1,
**characterised in that**
the power output of a drive motor of the vehicle is reduced and/or at least one service brake of the vehicle is actuated and/or at least one electrical drive motor designed to drive a wheel of the vehicle is used to brake the combination.

3. Method according to Claim 1 or 2,
**characterised in that**
the combination is then also braked if a driver of the vehicle requests a higher power output of a drive motor of the motor vehicle or leaves a braking device of the vehicle unactuated.

4. Method according to any one of Claims 1 to 3,
**characterised in that**
the combination is braked more strongly if a driver of the vehicle does not actuate a braking device of the vehicle sufficiently strongly in order to decelerate the combination to the speed at which the amplitude of the oscillation of the trailer falls below the predetermined value.

5. Device for stabilising the drive of a fishtailing trailer pulled by a vehicle, having a detection device (16) for detecting an amplitude of the oscillation of the trailer and having a braking device (14) for braking a combination comprising the trailer and the vehicle depending on the value of the amplitude, wherein the braking device (14) is designed to decelerate the combination to a speed at which the amplitude of the oscillation of the trailer falls below a predetermined value,
and having a control device (12) for controlling the braking device (14) depending on the driving speed of the combination in such a way that, in the case of a fishtailing trailer and existence of a first driving speed of the combination, the combination is decelerated more strongly than in the case of a fishtailing trailer and existence of a second driving speed of the combination which is lower than the first driving speed,
**characterised in that**
the control device (12) for controlling the braking device (14) is designed in such a way that the combination is already braked in the case of existence of the first driving speed when a lower value of the amplitude is exceeded than in the case of existence of the second driving speed, and in such a way that the braking procedure triggered in the case of existence of the first driving speed is only ended when a lower value of the amplitude is fallen below than a braking procedure triggered in the case of existence of the second driving speed.

## Revendications

1. Procédé pour stabiliser la marche d'une remorque en louvoiement tractée par un véhicule, selon lequel un ensemble attelé comprenant la remorque et le véhicule est freiné automatiquement lorsqu'une amplitude de l'oscillation de la remorque dépasse une valeur prédéterminée, l'ensemble attelé étant décéléré à une vitesse à laquelle l'amplitude de l'oscillation de la remorque devient inférieure à une valeur prédéterminée,
selon lequel, lorsque la remorque louvoie et que l'ensemble attelé roule à une première vitesse, l'ensemble attelé est décéléré plus fortement que lorsque la remorque louvoie et que l'ensemble attelé roule à une deuxième vitesse qui est inférieure à la première vitesse,
**caractérisé en ce que**, lorsqu'on roule à la première vitesse, on freine déjà l'ensemble attelé en cas de dépassement d'une plus petite valeur de l'amplitude que lorsqu'on roule à la deuxième vitesse, l'opération de freinage déclenchée dans le cas de la première vitesse se terminant seulement lorsque l'amplitude devient inférieure à une plus petite valeur que celle utilisée dans le cas d'une opération de freinage déclenchée dans le cas de la deuxième vitesse.

2. Procédé selon la revendication 1, **caractérisé en ce que**, pour freiner l'ensemble attelé, on réduit la délivrance de puissance d'un moteur du véhicule et/ou on actionne au moins un frein de service du véhicule et/ou on utilise au moins un moteur électrique conçu pour entraîner une roue du véhicule.

3. Procédé selon la revendication 1 ou 2, **caractérisé en ce qu'**on freine aussi l'ensemble attelé lorsqu'un conducteur du véhicule demande une plus grande délivrance de puissance d'un moteur du véhicule ou n'actionne pas un dispositif de freinage du véhicule.

4. Procédé selon l'une des revendications 1 à 3, **caractérisé en ce qu'**on freine plus fortement l'ensemble attelé lorsqu'un conducteur du véhicule n'actionne pas assez fortement un dispositif de freinage du véhicule pour décélérer l'ensemble attelé à la vitesse à laquelle l'amplitude de l'oscillation de la remorque devient inférieure à la valeur prédéterminée.

5. Dispositif pour stabiliser la marche d'une remorque en louvoiement tractée par un véhicule, avec un dispositif de détection (16) pour détecter une amplitude de l'oscillation de la remorque et avec un dispositif de freinage (14) pour freiner un ensemble attelé comprenant la remorque et le véhicule en fonction de la valeur de l'amplitude, le dispositif de freinage (14) étant conçu pour décélérer l'ensemble attelé à une vitesse à laquelle l'amplitude de l'oscillation de la remorque devient inférieure à une valeur prédéterminée,
et avec un dispositif de commande (12) pour commander le dispositif de freinage (14) en fonction de la vitesse de l'ensemble attelé de telle sorte que, lorsque la remorque louvoie et que l'ensemble attelé roule à une première vitesse, l'ensemble attelé est décéléré plus fortement que lorsque la remorque louvoie et que l'ensemble attelé roule à une deuxième vitesse qui est inférieure à la première vitesse,
**caractérisé en ce que** le dispositif de commande (12) pour commander le dispositif de freinage (14) est conçu de telle sorte que, lorsqu'on roule à la première vitesse, on freine déjà l'ensemble attelé lors du dépassement d'une plus petite valeur de l'amplitude que lorsqu'on roule à la deuxième vitesse et de telle sorte que l'opération de freinage déclenchée dans le cas de la première vitesse se termine seulement lorsque l'amplitude devient inférieure à une plus petite valeur que celle utilisée dans le cas d'une opération de freinage déclenchée dans le cas de la deuxième vitesse.
